# FASCICULE DE BREVET EUROPEEN

(11) **EP 1 899 681 B1**
(45) Date de publication et mention de la délivrance du brevet: **27.05.2009**
(21) Numéro de dépôt: 06763769.4
(22) Date de dépôt: 19.06.2006
(51) Int. Cl.: G01C 19/56

(54) **CAPTEUR GYROMETRIQUE MICRO-USINE REALISANT UNE MESURE DIFFERENTIELLE DU MOUVEMENT DES MASSES VIBRANTES**
MIKROBEARBEITETER GYROMETRISCHER SENSOR ZUR DIFFERENZMESSUNG DER BEWEGUNG VON VIBRIERENDEN MASSEN
MICRO-MACHINED GYROMETRIC SENSOR FOR DIFFERENTIAL MEASUREMENT OF THE MOVEMENT OF VIBRATING MASSES

(30) Priorité: 05.07.2005 FR 0507144
(43) Date de publication de la demande: 19.03.2008
(73) Titulaire: Thales, 92200 Neuilly Sur Seine (FR)
(72) Inventeur: ROUGEOT, Claude, F-69007 Lyon (FR); CHAUMET, Bernard, F-86100 Chatellerault (FR); LE VERRIER, Bertrand, F-26120 Montelier (FR); WILLEMIN, Jérôme, F-94117 Arcueil Cedex (FR)
(74) Mandataire: Esselin, Sophie
(86) Numéro de dépôt international: PCT/EP2006/063306
(87) Numéro de publication internationale: WO 2007/003501

(56) Documents cités:
- EP-A- 1 519 149
- WO-A-20/04042324
- WO-A-20/05031257
- FR-A- 2 859 527

## Description

L'invention concerne un microgyromètre, c'est-à-dire un capteur micromécanique inertiel dédié à la mesure de vitesses angulaires, réalisé par des techniques de micro-usinage, avec une disposition originale des modules de mesure du mouvement des masses vibrantes.

Le micro-usinage de capteurs s'inspire des techniques de réalisation de circuits intégrés : il consiste à réaliser collectivement sur une seule plaque mince (en principe en silicium) plusieurs dizaines ou centaines de capteurs identiques, par des techniques de dépôt, dopage et photogravure qui définissent non seulement les parties électriques du capteur mais aussi les motifs géométriques de découpe qui donnent au capteur ses propriétés mécaniques.

Les techniques de gravure sont bien maîtrisées, et la fabrication collective réduit considérablement les coûts. La robustesse des dispositifs est excellente, et la petite taille des structures est très avantageuse.

Pour réaliser un microgyromètre, on constitue dans une plaque de silicium une masse vibrante suspendue et une structure d'excitation électrique pour mettre cette masse en vibration dans une direction déterminée. Lorsqu'on fait tourner le gyromètre autour d'un axe dit axe sensible du gyromètre, perpendiculaire à cette direction de vibration, une force de Coriolis est engendrée sur la masse. Cette force de Coriolis, qui est une composition vectorielle du mouvement de vibration et du mouvement de rotation, produit une vibration de la masse dans un sens perpendiculaire à la fois à la vibration d'excitation et à l'axe de rotation. Cette vibration naturelle résultante est détectée par une structure de détection, elle-même réalisée par micro-usinage.

Des structures à deux masses vibrantes couplées mécaniquement à la manière d'un diapason ont déjà été réalisées. Les deux masses sont coplanaires, usinées dans la même plaque de silicium (cf WO-A-2004-/042324 et FR-A-2 859 527).

En général, l'axe sensible de ces gyromètres est situé dans le plan de la plaque de silicium et la structure de détection détecte un mouvement perpendiculaire au plan des masses à l'aide d'électrodes placées au-dessus de chaque masse mobile. Les signaux électriques qui résultent de cette détection servent à déterminer une valeur de vitesse angulaire de rotation du gyromètre autour de son axe sensible.

Toutefois, la réalisation de structures de détection de mouvements perpendiculaires au plan des masses mobiles oblige en général à prévoir que le gyromètre comprend plusieurs plaques usinées, que l'on vient rapporter les unes sur les autres ; l'une des plaques comporte la structure vibrante micro-usinée proprement dite avec ses masses mobiles, ses bras de liaison et une structure d'excitation de la vibration ; au moins une autre plaque comporte des électrodes de détection de la vibration engendrée par la force de Coriolis. La fabrication de l'ensemble à plusieurs plaques est coûteuse.

C'est pourquoi on a également cherché à réaliser des structures technologiquement plus simples, usinées dans une seule plaque de silicium, et dans lesquelles un mouvement d'excitation de la masse mobile est engendré dans une direction Ox du plan alors qu'un mouvement résultant de la force de Coriolis est détecté dans une direction Oy du même plan, perpendiculaire à Ox. L'axe sensible du microgyromètre est dans ce cas un axe Oz perpendiculaire au plan de la plaque de silicium. La structure d'excitation et la structure de détection sont des peignes capacitifs interdigités réalisés au cours de l'usinage de la plaquette de silicium. Toutes les structures électriques sont réalisées sur la même plaque que la structure mécanique vibrante. La fabrication est de ce fait beaucoup moins coûteuse.

Dans ce type de gyromètre, il est nécessaire de bien séparer le mouvement d'excitation selon l'axe Ox et le mouvement de détection selon l'axe Oy : il faut en effet que la structure de détection détecte principalement le mouvement selon Oy qui résulte de la force de Coriolis, sans que la mesure soit polluée par une détection parasite du mouvement d'excitation selon Ox.

Dans le cas de gyromètre de l'état de l'art comportant deux masses vibrantes et détectant dans le plan leur mouvement, un effet différentiel est mis en oeuvre pour s'affranchir de non-linéarités et pour atteindre une sensibilité élevée. Cet effet différentiel consiste en une soustraction des signaux générés par le mouvement des masses, les masses vibrant, selon un même axe, en opposition de phase. Lorsque les deux masses n'ont pas une capacité statique parfaitement identique, la différence de capacités des deux masses est à l'origine d'une dérive du gyromètre qui nuit à son bon fonctionnement. Par ailleurs, les gyromètres de l'état de l'art comportent un module de détection pour mesurer le mouvement de chaque masse. Ces modules de détection délivrent un signal qui évolue dans le même sens, bien que les mouvements des deux masses soient inverses, ce qui rend sensible le gyromètre à une accélération, dynamique
ou statique, colinéaire à l'axe de déplacement des masses.

Un but de l'invention est de proposer une structure de microgyromètre qui permette une mesure de rotation avec une très bonne sensibilité, une très bonne linéarité, une très bonne stabilité de biais et des perturbations minimes dues au mouvement d'excitation ou à l'accélération statique ou dynamique appliquée dans l'axe colinéaire à l'axe de déplacement des masse. Un autre but est de proposer une structure de microgyromètre qui peut recevoir, outre les structures électriques de mise en vibration et de détection de mouvement, des structures électriques auxiliaires de réglage de fréquence, de compensation de biais (mesure de vitesse angulaire non égale à zéro lorsque la vitesse angulaire est égale à zéro) dus à des défauts intrinsèques ou à la dispersion de caractéristiques lors de la fabrication en série, et d'asservissement de la position des masses sur une position fixe pouvant être celle qu'elle occupe lorsqu'elles sont au repos.

Selon l'invention, on propose un gyromètre à structure vibrante réalisé par micro-usinage d'une plaque mince plane, ce gyromètre comportant deux ensembles mobiles symétriques (30, 50 ; 30', 50') par rapport à un axe central parallèle à une direction Oy du plan de la plaque, couplés par une structure de couplage (20, 20', 22) reliant ces deux ensembles pour permettre un transfert d'énergie mécanique de vibration entre eux, chacun des deux ensembles mobiles symétriques comporte deux éléments mobiles (30, 50), un premier élément mobile inertiel (50) étant relié à la structure de couplage (20, 20', 22) et pouvant vibrer selon deux degrés de liberté dans des directions orthogonales Ox et Oy du plan de la plaque, et un deuxième élément mobile (30) étant relié d'une part au premier élément (50) et d'autre part à des zones d'ancrage fixe (34, 36), par des moyens de liaison (40-46 ; 52-58) qui permettent la transmission au deuxième élément du mouvement de vibration du premier élément selon la direction Oy sans autoriser un mouvement du deuxième élément selon la direction Ox, une structure d'excitation (70) étant associée au premier élément mobile (50) pour exciter une vibration du premier élément selon Ox, et une première et une deuxième structures de détection de mouvement (90, 110 ; 100, 120 ) étant associées au deuxième élément mobile (30) de chacun des deux ensembles pour détecter une vibration des deuxièmes éléments selon Oy, le premier élément mobile (50) étant un cadre intermédiaire rectangulaire entourant le deuxième élément mobile désigné par l'appellation masse mobile (30), et la structure de couplage comportant deux cadres extérieurs (20, 20') dont chacun entoure le cadre intermédiaire d'un ensemble mobile respectif caractérisé en ce que chaque structure de détection comprend un premier module (90, 110 ; 90', 110') de détection et un deuxième module (100, 120 ; 100', 120') de détection, symétriques par rapport à l'axe de symétrie général Ox, les premiers modules (90, 110; 90', 110') de détection de chaque structure d'une part et les deuxièmes modules (100, 120 ; 100', 120') de détection de chaque structure d'autre part étant symétriques par rapport à l'axe central parallèle à la direction Oy, le premier et le deuxième modules de chaque structure fournissant des signaux de détections distincts variant en sens inverse l'un de l'autre qui sont un premier et un deuxième signaux S1M1, S1M2 pour le premier et le deuxième modules de la première structure et un troisième et quatrième signaux S2M1, S2M2 pour le premier et le deuxième modules de la seconde structure, et des moyens étant prévus pour réaliser la combinaison linéaire S1M1+ S2M2 - S1M2 - S2M1.

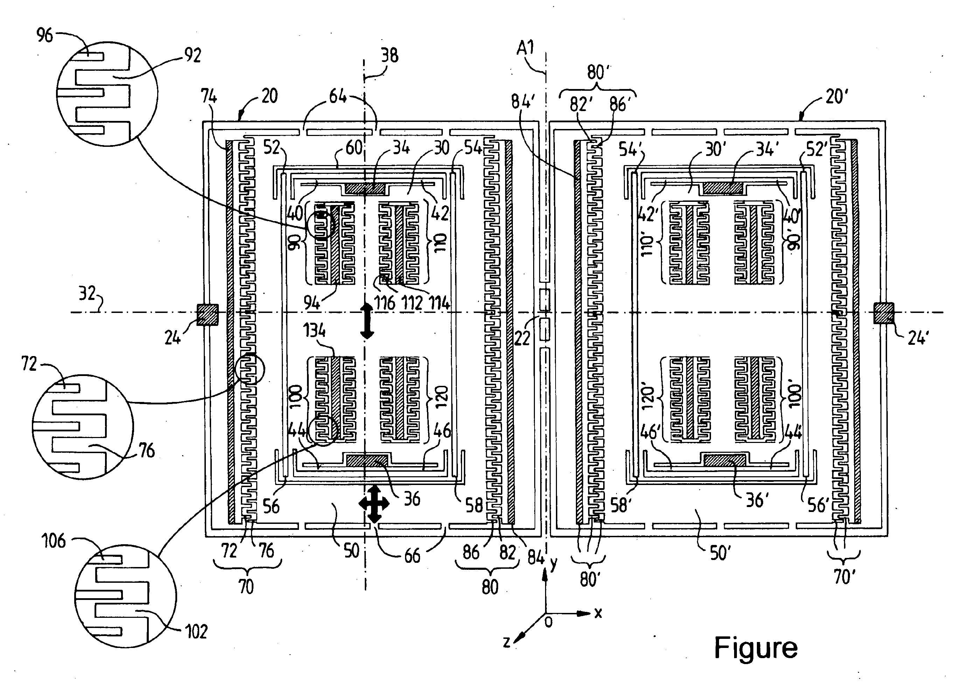

D'autres caractéristiques et avantages de l'invention apparaîtront à la lecture de la description détaillée qui suit et qui est faite en référence aux dessins annexés dans lesquels :
- la figure unique représente en vue de dessus la structure générale du gyromètre micro-usiné selon l'invention ;

La figure représente la plaque mince plane de silicium usinée selon l'invention pour faire un gyromètre dont l'axe sensible est perpendiculaire au plan de la plaque (qui est le plan de la figure).

Le silicium est choisi comme matériau préférentiel, d'une part pour ses propriétés mécaniques et d'autre part pour sa conductivité élevée lorsqu'il est suffisamment dopé par une impureté appropriée (du bore en général pour du silicium de type P). Le silicium conducteur permet de réaliser les fonctions électriques du gyromètre eut notamment les fonctions d'excitation et les fonctions de détection ; ces fonctions sont réalisées par des peignes capacitifs interdigités alimentés en courant ou en tension électrique ; les doigts de ces peignes, directement usinés dans le silicium conducteur, servent d'armatures de condensateurs utiles aux fonctions d'excitation et aux fonctions de détection.

L'épaisseur de la plaque de silicium d'origine est de quelques centaines de micromètres ; la plaque comporte d'une part des zones d'ancrage fixes formée dans cette épaisseur et d'autre part la structure vibrante proprement dite, libre par rapport aux zones d'ancrage et formée sur une épaisseur plus faible, par exemple sur une épaisseur de quelques dizaines de micromètres, isolée du reste de l'épaisseur de la plaque par un intervalle étroit. Sur cette épaisseur de quelques dizaines de micromètres, la plaque de silicium est découpée par micro-usinage selon les motifs de masse mobile, cadre mobile, structure de couplage, bras de flexion, et peignes interdigités désirés.

L'usinage de la structure peut être réalisé en utilisant comme substrat d'origine un substrat de silicium sur isolant, mais d'autres méthodes sont également possibles. Un substrat en silicium sur isolant est constitué d'un substrat de silicium de quelques centaines de micromètres d'épaisseur qui porte sur sa face avant une fine couche d'oxyde de silicium elle-même recouverte d'une couche de silicium monocristallin de quelques dizaines de micromètres d'épaisseur. L'usinage consiste à attaquer le silicium du substrat par sa face avant, selon les motifs de surface désirés, au moyen de techniques de photogravure en usage en microélectronique, jusqu'à atteindre la couche d'oxyde, avec un produit de gravure sélectif qui attaque le silicium sans attaquer significativement l'oxyde. On arrête la gravure lorsque la couche d'oxyde est mise à nu. Cette couche d'oxyde est ensuite enlevée par attaque sélective avec un autre produit de manière à ne conserver que la couche superficielle de silicium monocristallin, sauf à l'endroit des zones d'ancrage où la couche d'oxyde subsiste et forme une liaison solidaire entre le substrat et la couche superficielle de silicium monocristallin. L'usinage par la face avant définit les différents découpages des parties mobiles. Ce sont donc ces motifs de surface, zones d'ancrage et découpages des parties mobiles, que l'on voit sur la figure.

La structure générale du gyromètre est une structure de type diapason, c'est-à-dire une structure symétrique comportant deux ensembles inertiels mobiles vibrant en opposition de phase, ces ensembles mobiles étant reliés entre eux par une structure de couplage servant à transmettre sans pertes, d'un ensemble à l'autre, les énergies mécaniques de vibration des deux ensembles pour mettre en opposition de phase ces vibrations. La symétrie de la structure est une symétrie par rapport à un axe A1, avec un ensemble mobile de chaque côté de cet axe.

La structure de couplage est constituée de préférence par deux cadres extérieurs rectangulaires 20 et 20' à l'intérieur desquels sont situés les ensembles inertiels mobiles. Les cadres 20 et 20' sont reliés entre eux par une courte barre de liaison 22 pouvant être considérée comme rigide. La barre de liaison 22 relie le milieu d'un côté du premier cadre au milieu d'un côté adjacent du deuxième cadre. Elle constitue un centre de symétrie de toute la structure ; elle est perpendiculaire à l'axe A1 et centrée sur cet axe. La barre de liaison courte 22 peut être renforcée par deux autres barres de liaison courtes situées de part et d'autre de la barre 22 et également centrées sur l'axe A1. Ces barres courtes, plus ou moins éloignées de la barre 22, permettent un certain ajustement de l'écart entre les fréquences utiles d'excitation et de détection du microgyromètre (la fréquence de détection étant de préférence légèrement différente de la fréquence d'excitation et la différence de fréquences représentant la bande passante du gyromètre).

Les cadres extérieurs 20 et 20' de la structure de couplage entourent les deux ensembles mobiles en principe par au moins trois côtés et ils sont reliés à ces deux ensembles de préférence le long de côtés perpendiculaires à l'axe de symétrie générale A1. Les cadres 20 et 20' peuvent (facultativement) être fixés chacun à une zone d'ancrage 24, 24' située au milieu d'un côté opposé au côté relié à la barre de liaison 22. Dans ce cas, les cadres 20 et 20' entourent complètement chacun un ensemble mobile inertiel respectif. La barre de liaison centrale 22 et les autres côtés des cadres 20 et 20' ne sont pas reliés à des zones d'ancrage fixes.

Les peignes interdigités servant à la mise en vibration des ensembles inertiels et à la détection du mouvement résultant de la force de Coriolis sont disposés eux aussi à l'intérieur de chacun des cadres extérieurs 20 et 20'. Dans ce qui suit on va décrire seulement les éléments situés à l'intérieur du cadre 20, la structure étant rigoureusement identique pour l'autre cadre 20' ; les éléments intérieurs au cadre 20' sont désignés par les mêmes références que celles du cadre 20 mais affectés du signe 'prime'.

Chaque ensemble inertiel comporte une masse inertielle mobile centrale 30 et un cadre inertiel intermédiaire 50 qui l'entoure et qui est donc situé entre la masse 30 et le cadre extérieur 20.

La masse mobile 30 ne peut se déplacer que selon une direction Oy (axe vertical dans le plan de la figure) ; le cadre intermédiaire 50 peut se déplacer selon l'axe Oy et selon un axe Ox perpendiculaire à Oy et également situé dans le plan de la figure. L'axe sensible du gyromètre est un axe Oz perpendiculaire au plan de la plaque. On excite une vibration du cadre intermédiaire inertiel dans la direction Ox ; lorsque le gyromètre tourne autour de son axe sensible Oz, une vibration du cadre intermédiaire est engendrée selon l'axe Oy. Cette vibration selon Oy est transmise à la masse 30, alors que la vibration selon Ox n'est pas transmise. Comme on le verra, une structure d'excitation de la vibration est associée au cadre intermédiaire 50, et une structure de détection de vibration est associée à la masse inertielle 30. La structure de couplage, constituée par les cadres 20, 20' et la barre 22 qui les relie, transmet l'énergie mécanique de vibration de l'ensemble inertiel mobile d'un côté à l'autre de l'axe A1 aussi bien pour les vibrations selon Ox que selon les vibrations selon Oy car cette structure de couplage est reliée directement aux cadres intermédiaires qui peuvent vibrer à la fois selon Ox et selon Oy.

La masse mobile 30 est reliée à des zones d'ancrage fixes par au moins deux bras de flexion conçus pour autoriser un déplacement de la masse selon Oy mais pour empêcher tout mouvement significatif de la masse dans la direction Ox. Ces bras sont de préférence situés de part et d'autre d'un axe de symétrie 32 de la masse, parallèle à Ox. II y a alors deux zones d'ancrage 34 et 36 situées de part et d'autre de la masse mobile, symétriques par rapport à cet axe de symétrie 32. De plus, ces zones sont de préférence situées sur un autre axe de symétrie 38 de la masse, axe qui est parallèle à Oy. Les bras de flexion qui relient la masse 30 aux zones 34 et 36 sont des bras allongés dans la direction Ox, de manière à présenter une grande raideur (grande résistance à l'allongement) dans cette direction. Ils sont par ailleurs très étroits, comparativement à leur longueur, pour présenter une faible raideur dans la direction Oy perpendiculaire à Ox ; cette faible raideur autorise un déplacement de la masse selon Oy. Il y a de préférence quatre bras de flexion plutôt que deux, la masse étant reliée à la zone d'ancrage 34 par deux bras 40 et 42 dans le prolongement l'un de l'autre de part et d'autre de la zone 34 ; la masse est reliée par ailleurs à la deuxième zone d'ancrage 36 par deux bras 44 et 46 dans le prolongement l'un de l'autre de part et d'autre de la zone 36.

En pratique, comme on le voit sur la figure, pour gagner en encombrement dans la direction Oy sans réduire significativement la dimension de la masse dans cette direction, on effectue une découpe dans la masse autour de la zone d'ancrage ; pour maximiser la flexibilité des bras de flexion dans la direction Oy en augmentant le rapport entre la longueur et la largeur de ces bras, on relie chaque bras d'un côté à proximité d'un coin d'extrémité de la masse (la masse a une forme en principe généralement rectangulaire) et de l'autre à la zone d'ancrage située sur l'axe de symétrie 38. On notera qu'on pourrait aussi envisager de donner aux bras 40, 42, 44, 46 une forme repliée avec deux branches allongées dans la direction Oy, les bras étant alors attachés à la masse plus près de la zone d'ancrage centrale. On notera aussi que, plutôt qu'une zone d'ancrage centrale située au milieu d'un côté de la masse mobile, on pourrait avoir deux zones d'ancrage situées plutôt à proximité des coins d'extrémité de la masse de part et d'autre de l'axe 38.

Le cadre intermédiaire mobile 50 entoure de préférence complètement la masse 30. La masse 30 est reliée au cadre intermédiaire 50 par au moins deux bras de flexion qui ont pour particularité de présenter une très grande raideur (très grande résistance à l'allongement) dans la direction Oy et une faible raideur dans la direction Ox. Ces bras sont allongés dans la direction Oy et ont une largeur faible devant leur longueur, afin de présenter cette différence de raideurs.

Il y a de préférence quatre bras de flexion de ce type entre la masse 30 et le cadre intermédiaire 50, les bras étant situés en pratique chacun à un coin de la masse mobile si elle est de forme généralement rectangulaire. Ils sont disposés symétriquement d'une part par rapport à l'axe de symétrie 32 de la masse (axe parallèle à Ox) et d'autre part par rapport à l'axe de symétrie 38 (parallèle à Oy).

Ces bras sont désignés par les références 52, 54, 56, 58. Ils ont de préférence une forme repliée en U pour diviser par deux leur dimension longitudinale sans réduire significativement leur longueur utile donc sans diminuer significativement le rapport élevé entre leur raideur selon Oy et leur raideur selon Ox. Les deux branches repliées du U sont allongées parallèlement à Oy et sont reliées entre elles par un court élément de liaison. Les bras 52 à 58 pourraient cependant ne pas être repliés et s'étendre en totalité selon la direction Oy entre le cadre intermédiaire et la masse. Le repliement permet de gagner de la place sans modifier significativement les caractéristiques mécaniques désirées.

Si les bras sont repliés comme sur la figure, il est préférable de relier par ailleurs l'élément court de liaison (qui relie les deux branches du U) d'un premier bras 52 à l'élément court correspondant du bras 54 qui est symétrique du bras 52 par rapport à l'axe 38. Une traverse 60 est prévue à cet effet, parallèle à Ox, pour relier le fond du U du bras de liaison 52 au fond du U du bras de flexion 54, les bras 52 et 54 étant symétriques par rapport à l'axe 38. Une traverse similaire 62, symétrique de la traverse 60 par rapport à l'axe 32, relie les éléments symétriques 56 et 58. Ces traverses 60 et 62, parallèles à Ox, renforcent la symétrie de transmission d'un mouvement selon Oy imposé par le cadre intermédiaire mobile 50 à la masse 30. Elles ne sont pas présentes si les bras 52, 54, 56, 58 n'ont pas une forme repliée car dans ce cas les extrémités des bras 52 et 54 seraient déjà reliées rigidement par le cadre intermédiaire 50 lui-méme.

Comme on le voit sur la figure, la forme repliée en U allongé des bras de flexion entre le cadre mobile 50 et la masse mobile 30 est obtenue par des découpes dans le cadre mobile et dans la masse mobile, mais de manière générale, les bras de flexion partent à peu près d'un coin intérieur du cadre intermédiaire vers un coin en vis-à-vis de la masse même si le point de fixation effectif du bras sur le cadre ou sur la masse ne part pas exactement de ce coin. On peut considérer que la masse est suspendue globalement par ses quatre coins au cadre mobile.

Le cadre intermédiaire mobile 50, entouré par le cadre extérieur 20 de la structure de couplage, est relié à ce cadre extérieur par des bras de liaison courts 64 d'un côté, 66 de l'autre, les bras 64 étant symétriques des bras 66 par rapport à l'axe de symétrie 32. Les bras 64, de même que les bras 66, sont répartis le long d'un côté du cadre 50, ce côté étant parallèle à l'axe Ox. Ces bras courts constituent des liaisons pratiquement rigides à travers lesquelles l'énergie de vibration selon Ox et Oy du cadre intermédiaire 50 (et de la masse mobile 30) peut passer vers la structure de couplage et donc vers le deuxième cadre intermédiaire 50' et la deuxième masse mobile 30'. Dans l'exemple représenté, trois bras courts 64 sont répartis le long du côté du cadre intermédiaire 50 ; trois autres bras courts 66 sont répartis le long du côté opposé.

Il n'y a pas de bras de liaison entre le cadre intermédiaire et le cadre extérieur de couplage le long des côtés parallèles à l'axe Oy.

Le cadre intermédiaire 50 est excité en vibration selon Ox par une première structure en peigne interdigité 70 qui comporte un demi-peigne fixe 72, attaché à une zone d'ancrage 74 et un demi-peigne mobile 76 constitué le long d'un premier côté (parallèle à Oy) du cadre intermédiaire 50. Les dents ou doigts du demi-peigne fixe 72, en silicium conducteur usiné en même temps que les autres éléments du gyromètre, constituent la première armature d'une capacité et les dents ou doigts du demi-peigne mobile 76, également en silicium conducteur, constituent la deuxième armature de cette capacité. Classiquement, la structure en peigne agit comme excitateur du mouvement de la partie mobile grâce aux forces d'attraction qui s'exercent entre les doigts en regard lorsqu'une tension est appliquée entre les demi-peignes. La tension d'excitation est alternative pour engendrer un mouvement de vibration, et la fréquence de cette tension est choisie proche de la fréquence de résonance mécanique de la structure. La tension d'excitation est appliquée entre la zone d'ancrage 74 et l'une et/ou l'autre des zones d'ancrage 34 et 36. Le demi-peigne fixe 72 est en contact électrique direct (par le corps du silicium conducteur) avec la zone d'ancrage 74 ; le demi-peigne mobile 76 est en contact avec les zones d'ancrage 34 et 36 par l'intermédiaire des bras de flexion 52 à 58, du corps de la masse mobile, des bras de flexion 40 à 46, et du cadre intermédiaire 50, de sorte qu'en appliquant une tension entre la zone d'ancrage 74 et les zones d'ancrage 34 ou 36 on applique bien une tension entre la partie fixe et la partie mobile du peigne 70.

Le mouvement d'excitation engendré sur le cadre intermédiaire 50 est selon la direction Ox, les peignes agissant par modification de la surface en recouvrement mutuel des doigts intercalés.

Le microgyromètre comporte de préférence une autre structure à peignes interdigités associée au cadre intermédiaire, symétrique de la structure 70 par rapport à l'axe 38. Elle comporte un demi-peigne fixe 82 attaché à une zone d'ancrage 84, et un demi-peigne mobile 86 usiné le long d'un côté du cadre intermédiaire 50. Cette structure peut servir de détecteur du mouvement du cadre selon Ox. Elle est utile pour l'asservissement du mouvement excité par le peigne 70 ; l'asservissement est en général utile pour ajuster la fréquence d'excitation par rapport à la fréquence de résonance de la structure. Les tensions détectées par la structure 80 apparaissent entre la zone d'ancrage 84 et les zones d'ancrage 34 et 36 (ou encore la zone 24).

Une double structure de détection de mouvement comprenant une première et une deuxième structure élémentaire de détection est associée au deuxième élément mobile (30) de chacun des deux ensembles pour détecter une vibration des deuxièmes éléments selon Oy. Chaque structure élémentaire de détection comprend un premier module de détection et un deuxième module de détection.

Ces modules de détection sont symétriques par rapport à l'axe de symétrie 32 de la masse, ils comportent chacun deux peignes interdigités 90, 110 identiques. L'orientation de ces peignes dépend du principe sur lequel repose la détection : si la détection repose sur une mesure des variations de surface en recouvrement mutuel des doigts des demi-peignes fixe et mobile, le peigne de détection des mouvements selon Oy est disposé perpendiculairement au peigne d'excitation 70 (qui repose aussi sur des variations de surface en recouvrement). Mais si la détection repose sur une mesure des variations d'espacement entre les doigts du demi-peigne fixe et du demi-peigne mobile, le peigne de détection est disposé parallèlement au peigne d'excitation. La détection par la variation de l'espacement entre doigts est préférée car elle est plus sensible. L'interdigitation des peignes est alors dissymétrique au repos, les doigts d'un demi-peigne n'étant pas exactement au milieu de l'intervalle entre deux doigts de l'autre demi-peigne, alors qu'un peigne fonctionnant (comme le peigne d'excitation) sur la base de variations de surfaces en recouvrement a les doigts d'un demi-peigne au milieu de l'intervalle entre les doigts de l'autre demi-peigne.

C'est le cas sur la figure : tous les peignés de détection sont disposés avec la même orientation générale que les peignes 70 et 80, bien qu'ils soient associés à un mouvement selon Oy alors que les peignes 70 et 80 sont associés à un mouvement (excitation ou détection) selon Ox.

Dans l'exemple de la figure, le premier et le deuxième module sont associés à la masse mobile, chacun d'eux comporte deux peignes interdigités identiques. Le premier module comporte deux peignes 90 et 110 disposés parallèlement à l'axe de symétrie 38 et de part et d'autre de cet axe. Ces peignes jouent tous les deux le même rôle de détecteur du mouvement de la masse selon Oy , et on pourrait en variante se contenter d'un seul peigne placé au centre de la masse le long de l'axe 38.

Le peigne 90 comporte un demi-peigne fixe 92 attaché à une zone d'ancrage 94 et un demi-peigne mobile 96 faisant partie de la masse mobile elle-même. La masse mobile comporte une découpe pour laisser la place au peigne fixe 92 et à la zone d'ancrage 94, et les bords de cette découpe sont découpés en forme de doigts pour constituer le demi-peigne mobile 96 dans lequel viennent s'intercaler les doigts du demi-peigne fixe. Dans l'exemple représenté, le peigne 90 est double, c'est-à-dire que deux côtés de la découpe de la masse 30 sont pourvus de doigts, et le demi-peigne fixe 92 comporte des doigts de part et d'autre de la zone d'ancrage 94.

La structure interdigitée 110 est rigoureusement symétrique de la structure 90 par rapport à l'axe de symétrie 38 et est formée dans une autre découpe de la masse mobile 30. Elle comporte un demi-peigne fixe 112, une zone d'ancrage 114, et un demi-peigne mobile 116.

Pour la détection du mouvement selon Oy, un circuit électronique associé à cette structure détecte la modulation en fréquence des tensions électriques présentes entre la zone d'ancrage 94 et les zones d'ancrage 34 et 36, et/ou entre la zone 114 et les zones 34 et 36 constituant un premier signal de détection S1M1 du premier module. Cette modulation n'est due qu'à un déplacement de la masse mobile selon l'axe Oy puisque la masse ne peut se déplacer que selon cet axe.

Le deuxième module de détection comporte deux peignes 100, 120 qui sont symétriques aux peignes 90, 110 du premier module par rapport à l'axe de symétrie 32 de la masse. Le signal de détection S1M2 du deuxième module étant constitué par la modulation en fréquence des tensions électriques présentes entre une zone d'ancrage 104 du peigne 100, et les zones d'ancrage 34.

En raison de la symétrie du premier et du deuxième module suivant l'axe 32, lorsque la masse 30 est au repos, la position relative, selon l'axe Ox, des dents du demi-peigne mobile 96 par rapport aux dents du peigne fixe 92 est inversée par rapport à la position relative, selon l'axe Ox, des dents du demi-peigne mobile 106 par rapport aux dents du peigne fixe 102. En conséquence, lorsque la masse 30 est animée d'un mouvement suivant l'axe Oy, le premier signal de détection S1M1 et un deuxième signal de détection S1M2 issu du deuxième module évoluent en sens inverse.

Pour des raisons de symétries, il en est de même pour un troisième signal de détection S2M1 et un quatrième signal de détection S2M2 issus respectivement du premier et du deuxième module de détection de mouvement de la masse inertielle mobile centrale 30'.

Les quatre signaux de détection sont exploités sous forme d'une combinaison linéaire S1M1+ S2M2 - S1M2 - S2M1 qui constitue le signal de sortie résultant du gyromètre.

La combinaison linéaire traite de quatre signaux, générés par le mouvement de deux masses vibrant en opposition de phase, deux des signaux variant en sens inverse de deux autres. Le gyromètre délivrant le signal de sortie résultant est insensible à l'accélération dans la direction du mouvement des masses.

Sous l'hypothèse que la différence de capacité statique entre les premiers modules de la première et de la deuxième structure est identique à la différence de capacité statique entre les deuxièmes modules de la première et de la deuxième structure, cette différence de capacité statique ne produit aucun effet sur le signal de sortie résultant, et par conséquent on n'observe donc aucune dérive dans ce cas.

Avantageusement, le premier module de la première structure est relié électriquement au deuxième module de la deuxième structure pour réaliser une première somme S1M1+ S2M2 et réciproquement le deuxième module de la première structure est relié électriquement au premier module de la deuxième structure pour réaliser une deuxième somme S1M2 + S2M1, et en ce que le résultat des deux sommes est soustrait par un moyen électronique extérieur à la plaque.

On pourrait prévoir au moins un peigne interdigité supplémentaire associé à la masse mobile. Ce peigne permet d'ajuster électriquement, par une simple commande en tension continue, la raideur apparente des bras de flexion 40, 42, 44, 46, cet ajustement de raideur ayant une conséquence directe sur l'ajustement de la fréquence de vibration naturelle selon Oy en présence d'une force de Coriolis. En effet, la résonance mécanique naturelle des ensembles mobiles dépend de la raideur des bras de flexion qui s'opposent au mouvement de vibration engendré. Un ajustement de raideur, donc de fréquence, permet de compenser les variations de fréquence de résonance qui pourraient résulter de non-uniformités ou de défauts de fabrication. Les écarts entre la fréquence réelle et la fréquence théorique prévue peuvent ainsi être compensés.

Avec un peigne alimenté en tension continue, et agissant sur la masse mobile 30 pour exercer un effort constant dans la direction Oy, on peut exercer une contrainte au repos sur les bras de flexion 40, 42, 44, 46. Cette contrainte tend à créer une raideur négative, d'origine électrostatique, dont la valeur absolue vient se soustraire à la raideur naturelle de ces bras dans la direction Oy.

Le peigne qui pourrait exercer cette contrainte est un peigne orienté comme les autres peignes (direction générale selon Oy) et dans ce cas il agit par variation de l'espacement entre doigts des demi-peignes (peigne à doigts décalés). Un seul peigne central peut suffire, ou bien deux peignes symétriques disposés latéralement de part et d'autre de l'axe 38. Le peigne d'ajustement de raideur comporte un demi-peigne fixe, une zone d'ancrage autonome (pour une alimentation électrique autonome), et un demi-peigne mobile constitué encore par des doigts directement découpés dans la masse mobile.

On peut également prévoir une autre amélioration consistant à associer deux nouveaux peignes à la masse mobile. Ces peignes supplémentaires sont destinés à exercer, grâce à une application de tensions continues appropriées sur chacun d'eux, un effort de torsion de la masse mobile autour de son centre de symétrie. Ceci a pour effet de modifier l'orientation du mouvement d'excitation par rapport au mouvement de détection, et de modifier par conséquent (dans un sens tendant à le compenser) le biais en quadrature du gyromètre.

Les biais du gyromètre sont les valeurs de signal non nulles mesurées alors que la vitesse angulaire de rotation du gyromètre est nulle. Le biais en quadrature résulte de mouvements selon un axe alors qu'un effort est en réalité exercé sur un axe perpendiculaire. Il résulte de défauts de rectangularité de sections de poutres ou d'autres facteurs de dissymétrie. Ce biais peut être compensé en partie en exerçant une certaine torsion de la masse mobile. Cette torsion est exercée par exemple grâce à une action sur deux peignes interdigités situés diagonalement de part et d'autre d'un centre de symétrie de la masse mobile 30. Une tension continue est appliquée sur chaque peigne de manière à exercer un couple dans le sens qui convient à la compensation du biais. Le couple de torsion existe dès lors que les peignes exercent des forces appliquées en des points différents et dont les directions ne passent pas par le centre de symétrie de la masse.

Par exemple, on peut prévoir deux peignes, en plus des peignes de détection 90, 100, 110 et 120 pour exercer ce couple et des peignes d'ajustage de fréquence. Mais une seul peigne suffirait, à condition que ce peigne exerce un effort dans une direction qui ne passe pas par le centre de symétrie de la masse mobile. On comprendra par ailleurs que les peignes supplémentaires, disposés en diagonale sur la masse mobile et exerçant des efforts dans des directions qui ne passent pas par le centre de symétrie de la masse, pourraient servir à la fois à ajuster la fréquence et à exercer la torsion de compensation de biais ; en appliquant des tensions d'amplitude différentes sur les peignes supplémentaires, on crée à la fois un couple de torsion et un effort résultant vers le haut ou vers le bas, ce dernier créant la raideur négative souhaitée. Pour des raisons de symétrie et d'indépendance de la commande de raideur et de la commande de torsion, on préfère cependant une configuration avec des peignes spécifiquement pour l'ajustement de raideur et des peignes spécifiquement pour la compensation de biais en quadrature.

On peut enfin prévoir une autre amélioration consistant à associer deux nouveaux peignes à la masse mobile asservir sa position sur une position fixe pouvant être la position que la masse mobile occupe lorsqu'elle est au repos. De cette manière on s'affranchit des non-linéarité de la mesure délivrée par le gyromètre apparaissant lorsque le déplacement de la masse mobile est important.

Par exemple, on peut prévoir deux peignes, en plus des peignes de détection 90, 100, 110 et 120 qui sont des peignes pour exercer une force de rappel de la masse mobile vers une position fixe. La tension qui est appliquée à ces peignes vise à compenser le déplacement imprimé par le mouvement du gyromètre, la valeur de cette tension est calculée à partir de la mesure de la position délivrée par le peignes de détection.

Dans ce qui précède on a prévu que tous les peignes interdigités étaient placés dans des découpes de la masse mobile, mais on pourrait aussi envisager qu'ils soient disposés sur les bords de la masse mobile sans modifier les principes qui ont été expliqués ci-dessus.

On a ainsi décrit un microgyromètre qui est facilement réalisable à partir d'une plaque de silicium dans le plan de laquelle on a usiné à la fois deux ensembles inertiels mobiles et une structure de couplage mécanique qui les entoure, et dans lequel on a réalisé chaque ensemble mobile sous forme de deux parties, masse mobile et cadre mobile, le cadre mobile étant relié à la structure de couplage par des liaisons rigides, la masse mobile étant reliée au cadre d'une part et à des points d'ancrage d'autre part par des bras de flexion qui autorisent un mouvement dans le plan selon un seul degré de liberté pour la masse mobile et selon deux degrés de liberté pour le cadre. Le couplage mécanique entre les deux ensembles mobiles se fait aussi bien pour les vibrations d'excitation que pour les vibrations orthogonales résultant de la force de Coriolis. Il ne se fait pas par l'intermédiaire de bras de flexion souples mais directement par des liaisons rigides entre le cadre mobile et la structure de couplage (contrairement à des structures dans lesquelles le couplage entre ensembles mobiles se ferait par l'intermédiaire de bras de flexion qui serviraient à la fois à assurer la souplesse de suspension des ensembles inertiels et le couplage entre les deux ensembles).

Le gyromètre selon l'invention peut présenter de très bons coefficients de qualité en excitation et en détection, ce qui permet d'augmenter la sensibilité du gyromètre dans le cas où on utilise une fréquence d'excitation et une fréquence de détection identiques.

## Revendications

1. Gyromètre à structure vibrante réalisé par micro-usinage d'une plaque mince plane, ce gyromètre comportant deux ensembles mobiles symétriques (30, 50 ; 30', 50') par rapport à un axe central parallèle à une direction Oy du plan de la plaque, couplés par une structure de couplage (20, 20', 22) reliant ces deux ensembles pour permettre un transfert d'énergie mécanique de vibration entre eux, chacun des deux ensembles mobiles symétriques comporte deux éléments mobiles (30, 50), un premier élément mobile inertiel (50) étant relié à la structure de couplage (20, 20', 22) et pouvant vibrer selon deux degrés de liberté dans des directions orthogonales Ox et Oy du plan de la plaque, et un deuxième élément mobile (30) étant relié d'une part au premier élément (50) et d'autre part à des zones d'ancrage fixe (34, 36), par des moyens de liaison (40-46 ; 52-58) qui permettent la transmission au deuxième élément du mouvement de vibration du premier élément selon la direction Oy sans autoriser un mouvement du deuxième élément selon la direction Ox, une structure d'excitation (70) étant associée au premier élément mobile (50) pour exciter une vibration du premier élément selon Ox, et une double structure de détection de mouvement comprenant une première et une deuxième structure élémentaire de détection (90, 110 ; 100, 120 ) étant associée au deuxième élément mobile (30) de chacun des deux ensembles pour détecter une vibration des deuxièmes éléments selon Oy, le premier élément mobile (50) étant un cadre intermédiaire entourant le deuxième élément mobile désigné par l'appellation masse mobile (30), et la structure de couplage comportant deux cadres extérieurs (20, 20') dont chacun entoure le cadre intermédiaire d'un ensemble mobile respectif **caractérisé en ce que** chaque structure élémentaire de détection comprend un premier module (90, 110 ; 90', 110') de détection et un deuxième module (100, 120 ; 100', 120') de détection, symétriques par rapport à un axe de symétrie (32) parallèle à la direction Ox, les premiers modules (90, 110; 90', 110') de détection de chaque structure élémentaire d'une part et les deuxièmes modules (100, 120 ; 100', 120') de détection de chaque structure élémentaire d'autre part étant symétriques par rapport à l'axe central parallèle à la direction Oy, le premier et le deuxième module de chaque structure élémentaire fournissant des signaux de détection distincts variant en sens inverse l'un de l'autre qui sont un premier et un deuxième signal S1M1, S1M2 pour le premier et le deuxième module de la première structure élémentaire et un troisième et quatrième signal S2M1, S2M2 pour le premier et le deuxième module de la seconde structure élémentaire, et des moyens étant prévus pour réaliser la combinaison linéaire S1M1+ S2M2 - S1M2 - S2M1.

2. Gyromètre selon la revendication 1, **caractérisé en ce que** le premier module (90, 110) de la première structure élémentaire est relié électriquement au deuxième module (100', 120') de la deuxième structure élémentaire pour réaliser une première somme S1M1 + S2M2 et réciproquement le deuxième module (100, 120) de la première structure élémentaire est relié électriquement au premier module (90', 100') de la deuxième structure élémentaire pour réaliser une deuxième somme S1M2 + S2M1, et **en ce que** des moyens sont prévus pour soustraire la première et la deuxième somme.

3. Gyromètre selon l'une des revendications 1 à 2, **caractérisé en ce que** la structure d'excitation du premier élément mobile est un peigne capacitif à électrodes interdigitées usiné dans la plaque mince plane.

4. Gyromètre selon l'une des revendications 1 à 3, **caractérisé en ce que** les modules de détection de la structure élémentaire de détection comportent au moins un peigne capacitif à électrodes interdigitées usiné dans la plaque mince plane.

5. Gyromètre selon l'une des revendications 1 à 4, **caractérisé en ce qu'**il comporte au moins un peigne interdigité associé à chaque deuxième élément mobile, pour exercer un couple de torsion ajustable sur le deuxième élément mobile.

6. Gyromètre selon l'une des revendications 1 à 4, **caractérisé en ce qu'**il comporte un peigne interdigité associé à chaque deuxième élément mobile, pour l'ajustement de la fréquence de détection.

7. Gyromètre selon l'une des revendications 1 à 4, **caractérisé en ce qu'**il comporte au moins un peigne interdigité associé à chaque deuxième élément mobile, pour asservir la position du deuxième élément mobile sur une position pouvant être celle que le deuxième élément mobile a lorsqu'il est au repos.

## Claims

1. Gyroscope with a vibrating structure, produced by micromachining a thin planar wafer, this gyroscope comprising two symmetrical moving assemblies (30, 50; 30', 50') that are symmetrical with respect to a central axis parallel to a direction Oy of the plane of the wafer and are coupled by a coupling structure (20, 20', 22) that connects these two assemblies in order to allow mechanical vibration energy to be transferred between them, each of the two symmetrical moving assemblies comprises two moving elements (30, 50), an inertial first moving element (50) being connected to the coupling structure (20, 20', 22) and able to vibrate in two degrees of freedom in orthogonal directions Ox and Oy of the plane of the wafer, and a second moving element (30) being connected, on one side, to the first element (50) and, on the other side, to fixed anchoring regions (34, 36) via linking means (40-46; 52-58) that allow the vibration movement of the first element in the Oy direction to be transmitted to the second element without permitting any movement of the second element in the Ox direction, an excitation structure (70) being associated with the first moving element (50) in order to excite a vibration of the first element along Ox, and a double movement detection structure comprising first and second elementary detection structures (90, 110; 100, 120) being associated with the second moving element (30) of each of the two assemblies in order to detect a vibration of the second elements along Oy, the first moving element (50) being an intermediate frame surrounding the second moving element, denoted by the name moving mass (30), and the coupling structure comprising two outer frames (20, 20'), each of which surrounds the intermediate frame of a respective moving assembly, **characterized in that** each elementary detection structure comprises a first detection module (90, 110; 90', 110') and a second detection module (100, 120; 100', 120') which are symmetrical with respect to an axis of symmetry (32) parallel to the Ox direction, the first detection modules (90, 110'; 90', 110) of each elementary structure on the one hand and the second detection modules (100, 120; 100', 120') of each elementary structure on the other hand being symmetrical with respect to the central axis parallel to the Oy direction, the first and second modules of each elementary structure delivering separate detection signals that vary inversely with respect to one another, these being first and second signals S1M1, SlM2 in the case of the first and second modules of the first elementary structure and third and fourth signals S2M1, S2M2 in the case of the first and second modules of the second elementary structure, and means being provided for producing the linear combination S1M1 + S2M2 - S1M2 - S2M1.

2. Gyroscope according to Claim 1, **characterized in that** the first module (90, 110) of the first elementary structure is electrically connected to the second module (100', 120') of the second elementary structure in order to produce a first sum S1M1 + S2M2, and reciprocally the second module (100, 120) of the first elementary structure is electrically connected to the first module (90', 100') of the second elementary structure in order to produce a second sum SlM2 + S2M1, and **in that** means are provided for subtracting the second sum from the first sum.

3. Gyroscope according to either of Claims 1 and 2, **characterized in that** the excitation structure of the first moving element is a capacitive comb with interdigitated electrodes, said comb being machined in the thin planar wafer.

4. Gyroscope according to one of Claims 1 to 3, **characterized in that** the detection modules of the elementary detection structure comprise at least one capacitive comb with interdigitated electrodes, said comb being machined in the thin planar wafer.

5. Gyroscope according to one of Claims 1 to 4, **characterized in that** it includes at least one interdigitated comb associated with each second moving element, in order to exert an adjustable torque on the second moving element.

6. Gyroscope according to one of Claims 1 to 4, **characterized in that** it includes an interdigitated comb associated with each second moving element, in order to adjust the detection frequency.

7. Gyroscope according to one of Claims 1 to 4, **characterized in that** it includes at least one interdigitated comb associated with each second moving element, in order to slave the position of the second moving element on a position which may be that which the second moving element occupies when it is at rest.

## Patentansprüche

1. Gyrometer mit vibrierender Struktur, das durch Mikrobearbeitung einer dünnen ebenen Platte hergestellt wird, wobei dieses Gyrometer zwei bewegliche Einheiten (30, 50; 30', 50') aufweist, die bezüglich einer Mittelachse parallel zu einer Richtung Oy der Ebene der Platte symmetrisch sind, gekoppelt durch eine Kopplungsstruktur (20, 20', 22), die diese zwei Einheiten verbindet, um einen Transfer mechanischer Vibrationsenergie zwischen ihnen zu erlauben, wobei jede der zwei symmetrischen beweglichen Einheiten zwei bewegliche Elemente (30, 50) aufweist, ein erstes bewegliches Trägheitselement (50), das mit der Kopplungsstruktur (20, 20', 22) verbunden ist und gemäß zwei Freiheitsgraden in orthogonalen Richtungen Ox und Oy der Ebene der Platte vibrieren kann, und ein zweites bewegliches Element (30), das einerseits mit dem ersten Element (50) und andererseits mit Zonen fester Verankerung (34, 36) durch Verbindungsmittel (40-46; 52-58) verbunden ist, die die Übertragung der Vibrationsbewegung des ersten Elements gemäß der Richtung Oy an das zweite Element erlauben, ohne eine Bewegung des zweiten Elements gemäß der Richtung Ox zuzulassen, wobei eine Anregungsstruktur (70) dem ersten beweglichen Element (50) zugeordnet ist, um eine Vibration des ersten Elements gemäß Ox anzuregen, und eine doppelte Bewegungserfassungsstruktur, die eine erste und eine zweite elementare Erfassungsstruktur (90, 110; 100, 120) enthält, dem zweiten beweglichen Element (30) jeder der zwei Einheiten zugeordnet ist, um eine Vibration der zweiten Elemente gemäß Oy zu erfassen, wobei das erste bewegliche Element (50) ein Zwischenrahmen ist, der das zweite bewegliche Element (30), das als bewegliche Masse bezeichnet ist, umgibt, und wobei die Kopplungsstruktur zwei Außenrahmen (20, 20') aufweist, von denen jeder den Zwischenrahmen einer jeweiligen beweglichen Einheit umgibt, **dadurch gekennzeichnet, dass** jede elementare Erfassungsstruktur ein erstes Erfassungsmodul (90, 110; 90', 110') und ein zweites Erfassungsmodul (100, 120; 100', 120') enthält, die bezüglich einer Symmetrieachse (32) parallel zur Richtung Ox symmetrisch sind, wobei die ersten Erfassungsmodule (90, 110; 90', 110') jeder elementaren Struktur einerseits und die zweiten Erfassungsmodule (100, 120; 100', 120') jeder elementaren Struktur andererseits bezüglich der Mittelachse parallel zur Richtung Oy symmetrisch sind, wobei das erste und das zweite Modul jeder elementaren Struktur unterschiedliche, in Gegenrichtung zueinander variierende Erfassungssignale liefern, die ein erstes und ein zweites Signal S1M1, S1M2 für das erste und das zweite Modul der ersten elementaren Struktur und ein drittes und ein viertes Signal S2M1, S2M2 für das erste und das zweite Modul der zweiten elementaren Struktur sind, und Mittel vorgesehen sind, um die lineare Kombination S1M1+S2M2-S1M2-S2M1 durchzuführen.

2. Gyrometer nach Anspruch 1, **dadurch gekennzeichnet, dass** das erste Modul (90, 110) der ersten elementaren Struktur elektrisch mit dem zweiten Modul (100', 120') der zweiten elementaren Struktur verbunden ist, um eine erste Summe S1M1+S2M2 zu bilden, und im Gegenzug das zweite Modul (100, 120) der ersten elementaren Struktur elektrisch mit dem ersten Modul (90', 100') der zweiten elementaren Struktur verbunden ist, um eine zweite Summe S1M2+S2M1 zu bilden, und dass Mittel vorgesehen sind, um die erste und die zweite Summe zu subtrahieren.

3. Gyrometer nach einem der Ansprüche 1 bis 2, **dadurch gekennzeichnet, dass** die Anregungsstruktur des ersten beweglichen Elements ein kapazitiver Kamm mit interdigitalen Elektroden ist, der in der dünnen ebenen Platte ausgearbeitet ist.

4. Gyrometer nach einem der Ansprüche 1 bis 3, **dadurch gekennzeichnet, dass** die Erfassungsmodule der elementaren Erfassungsstruktur mindestens einen kapazitiven Kamm mit interdigitalen Elektroden aufweisen, der in der dünnen ebenen Platte ausgearbeitet ist.

5. Gyrometer nach einem der Ansprüche 1 bis 4, **dadurch gekennzeichnet, dass** es mindestens einen jedem zweiten beweglichen Element zugeordneten Interdigitalkamm aufweist, um ein einstellbares Torsionsmoment auf das zweite bewegliche Element auszuüben.

6. Gyrometer nach einem der Ansprüche 1 bis 4, **dadurch gekennzeichnet, dass** es einen jedem zweiten beweglichen Element zugeordneten Interdigitalkamm für die Einstellung der Erfassungsfrequenz aufweist.

7. Gyrometer nach einem der Ansprüche 1 bis 4, **dadurch gekennzeichnet, dass** es mindestens einen jedem zweiten beweglichen Element zugeordneten Interdigitalkamm aufweist, um die Stellung des zweiten beweglichen Elements auf eine Stellung zu regeln, die diejenige sein kann, die das zweite bewegliche Element hat, wenn es in der Ruhestellung ist.
